# EUROPÄISCHE PATENTSCHRIFT

(11) **EP 0 915 008 B1**
(45) Veröffentlichungstag und Bekanntmachung des Hinweises auf die Patenterteilung: **14.08.2002**
(21) Anmeldenummer: 98118074.8
(22) Anmeldetag: 24.09.1998
(51) Int. Cl.: B62D 65/00, B23K 37/04

(54) **Spannvorrichtung**
Support device
Dispositif de support

(30) Priorität: 07.11.1997 DE 19749230
(43) Veröffentlichungstag der Anmeldung: 12.05.1999
(73) Patentinhaber: DaimlerChrysler AG, 70567 Stuttgart (DE)
(72) Erfinder: Beyer, Roland, 76228 Karlsruhe (DE)

(56) Entgegenhaltungen:
- FR-A- 2 578 464
- GB-A- 2 212 421
- US-A- 4 960 974

## Beschreibung

Die Erfindung betrifft eine Vorrichtung zum Einspannen eines Formteiles, insbesondere eines Karosserieteiles im Kraftfahrzeug-Rohbau, mit einem das Formteil aufnehmenden Rahmen, welcher mehrere Spannelemente zum Spannen des Formteiles aufweist, wobei das Spannelement ein am Formteil anliegendes Halteteil und ein das Formteil an das Halteteil andrückendes Klemmelement aufweist.

Die gattungsgemäße US 4 960 974 A zeigt eine solche Spannvorrichtung.

Derartige Vorrichtungen mit Spannelementen sind hinreichend bekannt. Mittels derartiger Vorrichtungen können Formteile, z. B. Seitenteile einer Kraftfahrzeugkarosserie aufgenommen werden, wobei über die Spannelemente die Formteile in der Vorrichtung gespannt werden. Derartige gespannte Formteile können nun entweder vermessen oder weiter bearbeitet werden. Bei den bekannten Vorrichtungen ist das Halteteil des Spannelements, an welches das Formteil angelegt wird, als Negativform des die Spannstelle umgebenden Bereiches ausgebildet, so dass sich das Formteil mit seiner Spannstelle exakt an das Halteteil anlegen kann. Dieses Halteteil besitzt in der Regel eine dreidimensionale Form und kann exakt auf die Spannstelle aufgesetzt werden. Um das Formteil an diesem Halteteil zu halter, wird das Formteil auf der gegenüberliegenden Seite mit einem Klemmelement an das Halteteil angedrückt.

Da das Formteil in der Vorrichtung nicht nur mittels eines einzigen Spannelementes, sondern in der Regel mit mehreren Spannelementen gehalten wird, ergibt sich das Problem, dass das Formteil mit seinen Spannstellen nicht immer exakt an allen Halteteilen anliegt, da das Formteil, insbesondere wenn es nicht biegesteif bzw. verwindungssteif ist, zum einen unter der eigenen Gewichtskraft verbogen wird, d. h. durchhängt, und Eigenspannungen aufweist, bzw. bereits verformt aus dem vorhergehenden Herstellungsprozess hervorgehen. Wird nun ein Halteteil mit einer derartigen dreidimensionalen Anlagefläche auf die Spannfläche aufgedrückt, dann liegt in der Regel das Halteteil nicht flächig am Formteil an, da das Formteil bzw. die Anlagefläche in der Regel in allen drei Raumrichtungen und unter Umständen noch verdreht zum Halteteil liegt. Wird nun das Formteil mit hoher Kraft an das Halteteil angedrückt, kann es zum einen zu plastischen Verformungen des Formteils kommen, zum anderen kann das Formteil zusätzlich noch verspannt werden, so dass seine Form verändert und unter Umständen noch weiter verschlechtert wird. Daher befinden sich derartige Halteteile auf Verschiebeschlitten, so dass die Halteteile über diese Verschiebeschlitten aus ihrer Solllage herausbewegt und an die Istlage des Bauteils herangeführt werden können. Über die Verstellung des Halteteils kann die Abweichung der Istlage von der Solllage ermittelt werden.

Es hat sich gezeigt, dass durch die Feinjustierung eines Halteteils und das Spannen des Formteils die Anlage des Formteils an diesem Halteteil zwar verbessert wird, die Anlage an anderen Halteteilen in der Regel verschlechtert wird. Eine Nachjustierung dieser Halteteile wird somit erforderlich. Dabei kann es vorkommen, dass bei dieser Nachjustierung die Anlage des Formteils am zuvor eingestellten Halteteil wieder verändert wird, so dass der gesamte Spannprozess des Formteils ein iterativer Vorgang ist, der sehr zeitaufwendig ist und bis zu 45 Minuten andauern kann, bis die Abweichungstoleranz von +/-0,2 mm eingehalten wird.

Der Erfindung liegt somit die Aufgabe zugrunde, eine Vorrichtung bereitzustellen, mit der verwindungsempfindliche Formteile schnell und exakt gespannt werden können.

Diese Aufgabe wird erfindungsgemäß mit einer Vorrichtung der eingangs genannten Art dadurch gelöst, dass das Halteteil derart ausgebildet ist, dass es punktförmig am Formteil anliegt, und das Klemmelement in der Flächennormalen des Anlagenpunktes am Formteil angreift.

Durch die punktförmige Anlage des Halteteils am Formteil wird eine eindimensionale Lageerfassung des Formteils erzielt. Sollte das Formteil, welches an der Spannstelle durchaus eine dreidimensional gekrümmte Oberfläche, z.B. eine Freiformfläche aufweisen kann, z. B. verdreht sein, so spielt dies für das punktuelle Spannes keine Rolle. Bei ebenen Flächen kann das Formteil durchaus in dieser Ebene verschoben sein, ohne dass dadurch die Spannqualität an der Spannstelle negativ beeinflusst wird. Das Formteil wird mit dem Spannelement lediglich in einer Dimension fixiert. Falls das Spannelement in einer zweiten Dimension gespannt werden muss, ist hierfür ein zweites Spannelement, welches ebenfalls punktförmig am Formteil liegt, erforderlich. Außerdem ist durch das Andrücken des Formteils mit einer in der Flächennormalen verlaufenden Andrückkraft gewährleistet, dass beim Andrücken des Formteils an das Halteteil keine Querkräfte und keine Momente in das Formteil eingeleitet werden, so dass das Formteil weder elastisch noch plastisch verformt wird. Dadurch werden benachbarte Spannstellen nicht beeinflusst.

Mit der erfindungsgemäßen Vorrichtungen können Formteile gespannt werden, die z.B. aus Blech, aus Kunststoff oder aus organischen Materialien sowie aus Verbundmaterialien bestehen.

Erfindungsgemäß weist das Klemmelement eine sphärische, insbesondere kugelsegmentförmige oder eine doppelkegelrollenförmige Oberfläche auf. Mit der sphärischen Oberfläche wird eine punktförmige Anlage des Klemmelements bzw. des Halteteils am Formteil erzielt. Auch bei einer doppelkegelrollenförmigen Oberfläche besteht eine punktförmige Anlage, wobei das Bauteil in einer Richtung, nämlich in Abrollrichtung der Doppelkegelrolle im Wesentlichen frei beweglich ist. Auf diese Weise werden Verspannungen des Formteils vermieder, wenn dieses nach dem Spannen noch in dieser Abrollrichtung verlagert werden soll.

Um insbesondere bei empfindlichen oder dünnwandigen Formteilen die Oberfläche bwz. die Form des Formteils nicht zu beschädigen, wird das Formteil mit vorgegebener Spannkraft mittels des Spannelements am Halteteil gespannt. Die Spannkraft wird also auf das Formteil abgestimmt, so dass z. B. auch extrem dünnwandige Bauteile ohne Verformung gespannt werden können.

Bevorzugt weist das Klemmelement ein unter Federkraft stehendes oder hydraulisch oder pneumatisch angetriebenes Klemmteil auf. Durch Einstellung der Federkraft oder durch Einstellung des Hydraulik- oder Pneumatikdruckes kann die Spannkraft auf die Bedürfnisse eingestellt werden. Außerdem sind die Spannkräfte auf diese Weise reproduzierbar aufbringbar.

Bei einem bevorzugten Ausführungsbeispiel ist das Halteteil mit einem in Richtung der Flächennormalen zwischen einer Ruhelage und einer Sollposition verlagerbaren Halteelement versehen. Dieses Halteelement, z. B. ein Zylinderstift oder dergleichen, steht unter der Kraft einer mechanischen, hydraulischen oder pneumatischen Feder und wird durch das Spannen des Formteils in das Halteteil bis zur Sollposition eingeschoben. Dabei kann ein die Sollposition des Halteelements im Halteteil erfassender Sensor vorgesehen sein. Das Signal des Sensors ist z. B. ein akustisch oder visuell erfassbarer, optischer oder elektrischer Informationsparameter. Dies kann z. B. eine Leuchtdiode oder ein elektrischer Impuls sein, der für weitere Prozessabläufe verwendbar ist. Eine Leuchtdiode hat den wesentlichen Vorteil, dass die Bedienperson bereits beim Spannen darüber informiert wird, ob sich das Formteil bei der vorgegebenen Spannkraft in der gewünschten Sollposition befindet oder nicht. Mit dem Sensorsignal kann außerdem während des Spannens das Klemmteil angehalten und in dieser Lage arretiert werden. Das Formteil befindet sich dann ebenfalls in der gewünschten Sollposition.

Um insbesondere bei schweren Formteilen, die sich unter dem eigenen Gewicht verformen, ein Spannen dieses Formteils in der Vorrichtung zu erzielen, ohne dass das Formteil vom Eigengewicht beeinflusst wird, weist der Rahmen ein oder mehrere Auflageelemente für das Formteil zur Kompensation der Schwerkraft auf. Dabei sind die Auflageelemente unter der Kraft einer Feder im Rahmen angeordnet. Dies bedeutet, dass das Formteil im Rahmen federnd aufgehängt ist, so dass es aus dieser Position nach wie vor geringfügig verlagerbar ist. Dabei wird jedoch die Gewichtskraft durch die Auflageelemente kompensiert, indem die Auflageelemente eine der Gewichtskraft entgegengerichtete Kraft auf das Formteil ausüben. Dabei kann die Feder eine, insbesondere einstellbare, mechanische, hydraulische oder pneumatische Feder sein. Dies hat den wesentlichen Vorteil, dass durch Einstellen der Federkraft die Auflageelemente an das Gewicht des Formteils exakt angepasst werden kann und dadurch die Sollposition des Formteils in der Vorrichtung eingestellt werden kann.

Mit der erfindungsgemäßen Vorrichtung kann das Formteil mit einer vorgegebenen Kraft in Richtung auf das Halteteil gedrückt und ermittelt werden, ob es am Halteteil anliegt. Das Formteil wird auf diese Weise abgelehrt. Reicht die Anpresskraft zur Anlage des Formteiles nicht aus, dann befindet sich das Formteil nicht in der Solllage. Es kann nun das Halteteil so weit verstellt werden, bis dieses am Formteil anliegt, so dass auf diese Weise die Abweichung von der Solllage ermittelt werden kann. Das Formteil wird nun vermessen. Das Halteteil wird in diesem Fall als Messwerkzeug verwendet.

Eine erfindungsgemäße Verwendung der Vorrichtung wird darin gesehen, dass diese beim Vermessen der Formteile und/oder beim Spannen der Formteile in einem Fügeprozess eingesetzt wird. Auf diese Weise können die Formteile zum einen exakt abgelehrt, vermessen oder aber nur exakt positioniert werden, so dass sie mit anderen Formteilen genauer verbunden werden, insbesondere verschweißt werden können. Außerdem kann unmittelbar vor und/oder nach dem Fügen ein 100 %-iges Ablehren bzw. Vermessen der Einzelteile und/oder der miteinander verbundenen Formteile durchgeführt werden, wofür die erfindungsgemäße Vorrichtung ebenfalls verwendet wird.

Weitere Vorteile, Merkmale und Einzelheiten der Erfindung ergeben sich aus den Unteransprüchen sowie aus der nachfolgenden 3eschreibung, in der unter Bezugnahme auf die Zeichnung besonders bevorzugte Ausführungsbeispiele im Einzelnen beschrieben sind. Dabei können die in der Zeichnung dargestellten oder in der Beschreibung und in den Ansprüchen erwähnten Merkmale jeweils einzeln für sich oder in beliebiger Kombination erfindungswesentlich sein. In der Zeichnung zeigen:
- Figur 1: eine Seitenansicht eines in einen Rahmen eingesetzten Seitenteils einer Kraftfahrzeugkarosserie;
- Figur 2: einen Schnitt durch eine Seitenwand einer Kraftfahrzeugkarosserie, welche in die erfindungsgemäße Vorrichtung eingespannt ist;
- Figur 3: einen weiteren Schnitt durch eine Seitenwand einer Kraftfahrzeugkarosserie, welche in der erfindungsgemäßen Vorrichtung gespannt ist;
- Figur 4: eine Seitenansicht einer Ausführungsform eines Halteteils der erfindungsgemäßen Vorrichtung; und
- Figur 5: eine schematische Darstellung einer Einspannung eines Formteiles gemäß dem Stand der Technik und gemäß der Erfindung.

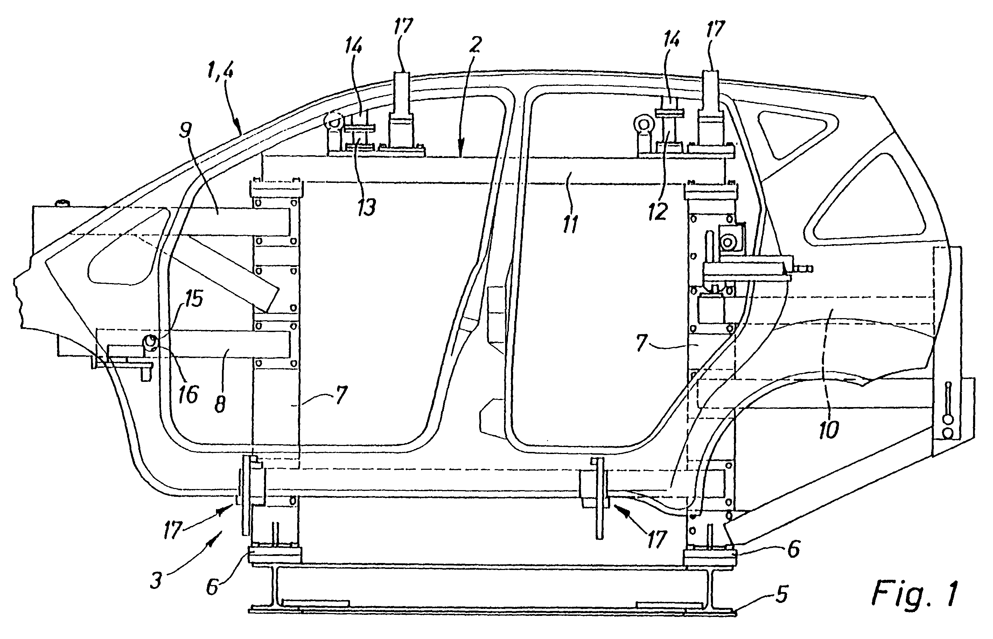

In der Figur 1 ist ein insgesamt mit 1 bezeichnetes Seiteninnenteil einer Kraftfahrzeugkarosserie dargestellt, welches in einen mit 2 bezeichneten Rahmen einer Vorrichtung 3 eingespannt ist. Ein derartiges Seiteninnenteil 1 besteht aus einem relativ dünnwandigen Formteil 4, welches aufgrund der geringen Wandstärke sehr verwindungsempfindlich ist. Der Rahmen 2 weist einen Basisträger 5, und zwei darauf befestigte Querträger 6 sowie mehrere Stützen 7 auf, an welchem Arme 8, 9 und 10 befestigt sind. Die beiden Stützen 7 sind über einen Verbindungsträger 11 miteinander verbunden. Ein derartiger Rahmen 2 ist verwindungssteif und kann sowohl das Formteil 2 als auch alle zum Spannen erforderlichen Elemente tragen.

Der Verbindungsträger 11 ist mit zwei Konsolen 12 und 13 versehen, die zur Aufnahme von Auflageelementen 14 dienen. Diese Auflageelemente 14 sind in Vertikalrichtung federnd gelagert und dienen zur Aufnahme des Formteils 4. Am Arm 8 ist ein weiteres Auflageelement 15 vorgesehen, welches in eine Öffnung 16 des Formteils 4 eingreift und dieses ebenfalls abstützt. Das Formteil 4 kann am Auflageelement 15 geringfügig in Längsrichtung verlagert werden. Mit den Auflageelementen 14 und 15 wird das Formteil 4 getragen, und die Schwerkraft bzw. Gewichtskraft des Formteils 4 aufgefangen. Das Formteil 4 übt demnach keine oder nur unbedeutend geringe, von der Schwerkraft herrührende Kräfte auf die Spannelemente 17 aus. Über diese Spannelemente 17 wird das Formteil 4, wie weiter unten näher beschrieben, mit dem Rahmen 2 verbunden.

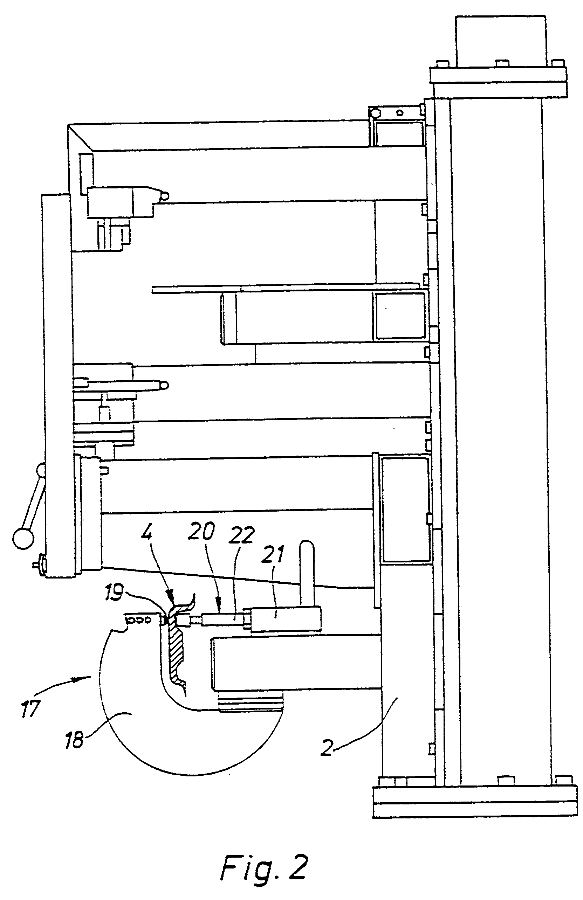

Die Figur 2 zeigt ein Spannelement 17 in vergrößerter Darstellung, mit welchem ein Formteil 4 gespannt wird. Das Spannelement 17 weist einen relativ steifen Halteteil 18 auf, der mit dem Rahmen 1 verbunden ist und punktförmig am Formteil 4 anliegt. Hierfür dient ein halbkugelförmiges Anlageelement 19, welches bei ebenen Spannflächen verwendet wird. Weist die Spannfläche eine sphärische Krümmung auf, dann kann das Anlageelement 19 auch eben ausgebildet sein. Dem Anlageelement 19 gegenüberliegend befindet sich ein Klemmelement 20, über welches das Formteil 4 am Halteteil 18 gehalten wird. Die Richtung der Spannkraft verläuft in der Flächennormalen des Formteils 4 im Anlagepunkt des Anlageelements 19. Auf diese Weise wird das Formteil 4 momenten- und querkräftefrei gespannt.

Das Klemmelement 20 befindet sich an einem Schlitten 21, welcher in Richtung auf das Formteil 4 zugestellt werden kann. Im Schlitten 21 befindet sich eine mechanische, hydraulische oder pneumatische Feder, die ein als Stempel 22 ausgebildetes Klemmteil des Klemmelements 20 in der ausgefahrenen Stellung hält. Übersteigt die Anpresskraft einen voreingestellten Wert, dann wird der Stempel 22 entgegen der Kraft der Feder in den Schlitten 21 eingefahren. Dabei ist die Kraft der Feder einstellbar und auf das Formteil 4 abgestimmt.

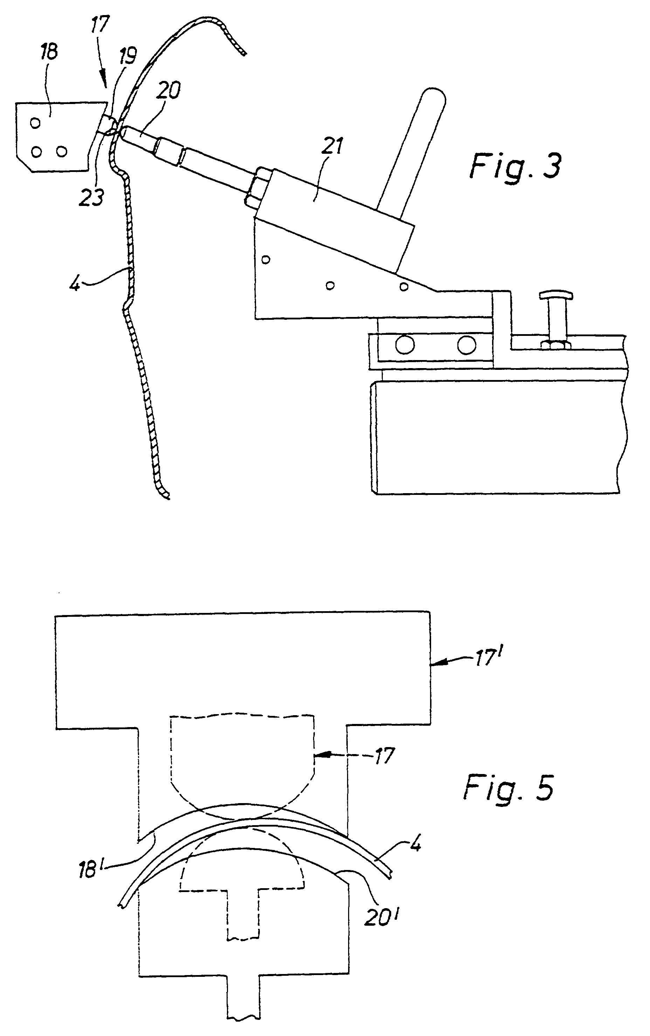

In der Figur 3 ist eine weitere Ausführungsform eines Klemmelements 17 dargestellt, wobei hier deutlich erkennbar ist, dass der Schlitten 21 derart geneigt ist, dass das Klemmelement 20 nach wie vor in der Flächennormalen im Anlagepunkt 23 des Anlageelements 19 des Halteteils 18 eine Klemmkraft auf das Formteil 4 ausübt. Auch die Zustellung des Klemmelements 20 über den Schlitten 21 erfolgt in dieser Flächennormalen.

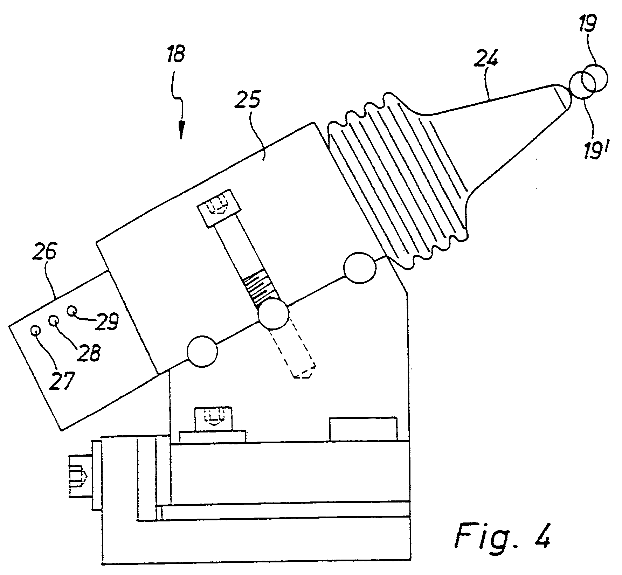

Die Figur 4 zeigt ein weiteres Ausführungsbeispiel eines Halteteils 18, bei dem das Anlageelement 19 an einem Stößel 24 befestigt ist. Das Anlageelement 19 weist bei diesem Ausführungsbeispiel die Form einer Kugel auf. Im Halteteil 18 befindet sich eine (nicht dargestellte) Feder, über welche der Stößel 24 aus dem Gehäuse 25 ausgefahren wird. Von dieser ausgefahrenen Position kann der Stößel 24 in eine Sollposition eingedrückt werden, so dass das Anlageelement 19 die mit 19' bezeichnete Position einnimmt. Außerdem ist im Gehäuse 25 ein Sensor vorgesehen, der die eingefahrene Position des Stößels 24 erfasst. An dem dem Stößel 24 gegenüberliegenden Ende 26 befinden sich drei Leuchtdioden 27 bis 29, welche vom Sensor angesteuert werden. Dabei zeigt z. B. die Leuchtdiode 28 die Sollposition des Stößels 24 und somit des Anlageelements 19 an, wobei die Leuchtdioden 27 und 29 zulässige Grenzwerte für die Positionsabweichungen des Anlageelements 19 anzeigen. Bei einfachen Ausführungsbeispielen kann auch nur eine einzige Leuchtdiode 28 vorgesehen sein. Das vom Sensor erzeugte Referenzsignal kann auch für den Zeitraum des Prozessablaufs verwendet werden. Insbesondere kann mit diesem Signal die automatische Zustellung des Klemmelements 20 gestoppt werden. Außerdem kann dieses Signal in einem Fügeprozess als Startsignal für den Vorgang verwendet werden.

Die Figur 5 zeigt ein Spannelement 17' gemäß dem Stand der Technik und ein Spannelement 17 gemäß der Erfindung. Beim bekannten Spannelement 17' ist das Halteteil 18' als Negativform zum Formteil 4 ausgebildet. Dies gilt auch für das Klemmelement 20'. Ist das Formteil 4 gegenüber seiner Solllage verschoben oder verdreht, dann liegt das Halteteil 18' nicht mehr flächig am Formteil 4 an, sondern berührt es z.B. an einem außerhalb der Mitte liegenden Punkt. Außerdem liegt das Klemmelement 20' an einer Stelle am Formteil 4 an, welche nicht mit der Anlegestelle des Halteteils 18' korrespondiert. Wird nun das Klemmelement 20' in Richtung des Halteteils 18' bewegt, dann werden Querkräfte und Momente auf das Formteil 4 ausgeübt. Liegt das Halteteil 18, wie von der Erfindung vorgesehen, punktförmig an der Spannstelle an und liegt dem Halteteil 18 ein entsprechendes Klemmelement 20 gegenüber und wirken die Klemmkräfte in Normalenrichtung zur Spannstelle, dann werden beim Spannen keine Querkräfte und keine Momente in das Formteil 4 eingeleitet.

## Patentansprüche

1. Vorrichtung (3) zum Einspannen eines Formteils (4), insbesondere eines Karosserieteils im Kraftfahrzeug-Rohbau, mit einem das Formteil (4) aufnehmenden Rahmen (2), welcher mehrere Spannelemente (17) zum Spannen des Formteils (4) aufweist, wobei das Spannelement (17) ein am Formteil (4) anliegendes Halteteil (18) und ein das Formteil (4) an das Halteteil (18) andrückendes Klemmelement (20) aufweist, **dadurch gekennzeichnet, dass** das Halteteil (18) derart ausgebildet ist, dass es punktförmig am Formteil (4) anliegt und das Klemmelement (20) in der Flächennormalen des Anlagepunktes (23) am Formteil (4) angreift, so dass das Formteil lediglich in einer Dimension fixiert wird.

2. Vorrichtung nach Anspruch 1, **dadurch gekennzeichnet, dass** das Formteil (4) mit vorgegebener Spannkraft mittels des Klemmelements (20) am Halteteil (18) spannbar ist.

3. Vorrichtung nach Anspruch 2, **dadurch gekennzeichnet, dass** das Klemmelement (20) ein unter Federkraft stehendes oder hydraulisch oder pneumatisch angetriebenes Klemmteil aufweist.

4. Vorrichtung nach einem der vorhergehenden Ansprüche, **dadurch gekennzeichnet, dass** das Halteteil (18) mit einem in Richtung der Flächennormalen zwischen einer Ruhelage und einer Sollposition verlagerbaren Anlageelement (19) versehen ist.

5. Vorrichtung nach Anspruch 4, **dadurch gekennzeichnet, dass** ein die Sollposition des Anlageelements (19) im Halteteil (18) erfassender Sensor vorgesehen ist.

6. Vorrichtung nach Anspruch 5, **dadurch gekennzeichnet, dass** das Signal des Sensors ein visuell erfassender, optischer oder elektrischer Informationsparameter ist.

7. Vorrichtung nach Anspruch 6, **dadurch gekennzeichnet, dass** der Informationsparameter für weitere Prozessabläufe verwendbar ist.

8. Vorrichtung nach einem der vorhergehenden Ansprüche, **dadurch gekennzeichnet, dass** der Rahmen (2) ein oder mehrere Auflageelemente (14, 15) für das Formteil (4) zur Kompensation der Schwerkraft aufweist.

9. Vorrichtung nach Anspruch 8, **dadurch gekennzeichnet, dass** die Auflageelemente (14, 15) unter der Kraft einer Feder im Rahmen (2) angeordnet sind.

10. Vorrichtung nach Anspruch 9, **dadurch gekennzeichnet, dass** die Feder eine insbesondere einstellbare, mechanische, hydraulische oder pneumatische Feder ist.

11. Vorrichtung nach einem der vorhergehenden Ansprüche, **dadurch gekennzeichnet, dass** das Halteteil (18) ein sphärisches, insbesondere kugelsegmentförmiges, oder doppelkegelrollenförmiges Anlagelement (19) aufweist.

12. Vorrichtung nach einem der vorhergehenden Ansprüche, **dadurch gekennzeichnet, dass** sie zum Spannen von Formteilen (4) geeignet ist, die aus Blech, aus Kunststoff oder aus organischen Materialien sowie aus Verbundmaterialien bestehen

13. Verwendung einer Vorrichtung nach einem der vorhergehenden Ansprüche beim Vermessen von Formteilen (4) und/oder beim Spannen von Formteilen (4) in einem Fügeprozess.

14. Verwendung einer Vorrichtung nach einem der vorhergehenden Ansprüche als Spann- und Haltevorrichtung, als Lehre und/oder als Messvorrichtung.

## Claims

1. Device (3) for clamping a moulding (4), in particular a body member in a motor vehicle carcase, with a frame (2) for the moulding (4) having several clamping elements (17) for clamping the moulding (4), the clamping element (17) having a holding part (18) in contact with the moulding (4) and a clamping element (20) for pressing the moulding (4) against the holding part (18), **characterised in that** the holding part (18) is designed so that it sits in a tip-like contact on the moulding (4) and the clamping element (20) acts on the moulding (4) perpendicular to the plane of the contact point (23) so that the moulding is fixed in one dimension only.

2. Device as claimed in claim 1, **characterised in that** the moulding (4) is clamped against the holding part (18) by means of the clamping element (20) with a predeterminable clamping force.

3. Device as claimed in claim 2, **characterised in that** the clamping element (20) has a spring-biassed or hydraulically or pneumatically driven clamping part.

4. Device as claimed in one of the preceding claims, **characterised in that** the holding part (18) is provided with a contact element (19) which can be displaced in a plane-perpendicular direction between a non-operating position and a desired position.

5. Device as claimed in claim 4, **characterised in that** a sensor is provided in the holding part (18) to detect the desired position of the contact element (19).

6. Device as claimed in claim 5, **characterised in that** the signal of the sensor is a visually perceptible, optical or electric data parameter.

7. Device as claimed in claim 6, **characterised in that** the data parameter can be used for other process sequences.

8. Device as claimed in one of the preceding claims, **characterised in that** the frame (2) has one or more contact elements (14, 15) for the moulding (4) to compensate for gravity.

9. Device as claimed in claim 8, **characterised in that** the contact elements (14, 15) are spring-mounted in the frame (2).

10. Device as claimed in claim 9, **characterised in that** the spring is a mechanical, hydraulic or pneumatic spring and is adjustable in particular.

11. Device as claimed in one of the preceding claims, **characterised in that** the holding part (18) has a contact element (19) that is spherical, in particular semispherical, in shape or is the shape of a double-coned roller.

12. Device as claimed in one of the preceding claims, **characterised in that** it is suitable for clamping mouldings (4) made from sheet metal, plastics or organic materials as well as composite materials.

13. Use of a device as claimed in one of the preceding claims for measuring mouldings (4) and/or for clamping mouldings (4) in a seam-joining process.

14. Use of a device as claimed in one of the preceding claims as a clamping-and holding device, as a gauge . and/or as a measuring device.

## Revendications

1. Dispositif (3) pour serrer une pièce de forme (4), notamment un élément de carrosserie dans l'ébauche d'un véhicule automobile, comportant un cadre (2) qui reçoit la pièce de forme (4) et comporte plusieurs éléments de serrage (17) servant à serrer la pièce de forme (4), l'élément de serrage (17) comportant une partie de retenue (18), qui s'applique sur la pièce de forme (4), et un élément de serrage (20), qui serre la pièce de forme (4) sur la partie de retenue (18), **caractérisé en ce que** la partie de retenue (18) est agencée de telle sorte qu'elle s'applique ponctuellement sur la pièce de forme (4) et que l'élément de serrage (20) attaque la pièce de forme (4) selon la normale à la surface au niveau du point d'application (23) de sorte que la pièce de forme est fixée uniquement dans une dimension.

2. Dispositif selon la revendication 1, **caractérisé en ce que** la pièce de forme (4) peut être serrée avec une force de serrage prédéterminée au moyen de l'élément de serrage (20) sur la partie de retenue (18).

3. Dispositif selon la revendication 2, **caractérisé en ce que** l'élément de serrage (20) comporte une pièce de serrage soumis à l'action de la force d'un ressort ou entraînés hydrauliquement ou pneumatiquement.

4. Dispositif selon l'une des revendications précédentes, **caractérisé en ce que** la partie de retenue (18) comporte un élément d'application (19) qui peut être déplacé dans la direction de la normale à la surface entre une position de repos et une position de consigne.

5. Dispositif selon la revendication 4, **caractérisé en ce qu'**il est prévu un capteur détectant la position de consigne de l'élément d'application (19) dans la partie de retenue (18).

6. Dispositif selon la revendication 5, **caractérisé en ce que** le signal du capteur est un paramètre d'information à détection visuelle, optique ou électrique.

7. Dispositif selon la revendication 6, **caractérisé en ce que** le paramètre d'information peut être utilisé pour d'autres cycles de traitement.

8. Dispositif selon l'une des revendications précédentes, **caractérisé en ce que** le cadre (2) possède un ou plusieurs éléments d'appui (14, 15) pour la pièce de forme (15) pour la compensation de la force de pesanteur.

9. Dispositif selon la revendication 8, **caractérisé en ce que** les éléments d'application (14, 15) sont disposés dans le cadre (2) étant soumis à l'action de la force d'un ressort.

10. Dispositif selon la revendication 9, **caractérisé en ce que** le ressort est un ressort mécanique, hydraulique ou pneumatique, qui notamment est réglable.

11. Dispositif selon l'une des revendications précédentes, **caractérisé en ce que** la partie de retenue (18) comporte un élément d'application (19) sphérique, notamment en forme de segment de sphère, ou en forme de rouleau biconique.

12. Dispositif selon l'une des revendications précédentes, **caractérisé en ce qu'**il est approprié pour serrer des pièces de forme (4) qui sont réalisées en tôle, en matière plastique ou en des matériaux minéraux ainsi qu'en des matériaux composites.

13. Utilisation d'un dispositif selon l'une des revendications précédentes, lors de la mesure de pièces de forme (4) et/ou lors du serrage de pièces de forme (4) lors d'un processus d'assemblage.

14. Utilisation d'un dispositif selon l'une des revendications précédentes, en tant que dispositif de serrage et de retenue, en tant que gabarit et/ou en tant que dispositif de mesure.
